# EUROPÄISCHE PATENTSCHRIFT

(11) **EP 0 811 464 B1**
(45) Veröffentlichungstag und Bekanntmachung des Hinweises auf die Patenterteilung: **15.11.2000**
(21) Anmeldenummer: 97108983.4
(22) Anmeldetag: 04.06.1997
(51) Int. Cl.: B23Q 39/04, B23Q 1/00

(54) **Werkzeugmaschine**
Machine tool
Machine-outil

(30) Priorität: 05.06.1996 DE 19622475
(43) Veröffentlichungstag der Anmeldung: 10.12.1997
(73) Patentinhaber: INDEX-WERKE GMBH & CO. KG HAHN & TESSKY, 73730 Esslingen (DE)
(72) Erfinder: Trautmann, Günther Heinrich, 73230 Kirchheim-Nabern (DE)
(74) Vertreter: Hoeger, Stellrecht & Partner

(56) Entgegenhaltungen:
- EP-A- 0 096 091
- EP-A- 0 249 845
- EP-A- 0 342 045
- DE-A- 3 428 861
- DE-A- 4 038 660
- US-A- 2 892 388

## Beschreibung

Die Erfindung betrifft eine Werkzeugmaschine umfassend ein Maschinengestell, eine um eine Trommelachse drehbar am Maschinengestell angeordnete Spindeltrommel mit einer Vielzahl von an dieser gehaltenen Bearbeitungseinrichtungen für Werkstücke und mit der Trommel mitdrehbaren, den Bearbeitungseinrichtungen zugeordneten Antrieben, eine stationäre Steuer- und Versorgungseinheit für die Antriebe und einen einerseits mit den mit der Trommel mitdrehbaren Antrieben und andererseits mit der Steuer- und Versorgungseinheit verbundenen unterbrechungsfreien und drehverbindungsfreien, durch Drehung der Spindeltrommel verformbaren Leitungsstrang.

Bei einer derartige Werkzeugmaschine wird beispielsweise der Leitungsstrang beim Drehen der Spindeltrommel ebenfalls auf eine Trommel auf- oder abgewickelt. Diese Lösung hat den Nachteil, daß sie in radialer Richtung zur Trommelachse einen erheblichen Bauraum benötigt und somit bei an die Werkzeugmaschine angebauten Zusatzeinrichtungen vielfach störend wirkt.

Der Erfindung liegt daher die Aufgabe zugrunde, eine Werkzeugmaschine der gattungsgemäßen Art derart zu verbessern, daß der Leitungsstrang möglichst raumsparend geführt werden kann.

Diese Aufgabe wird bei einer Werkzeugmaschine der eingangs beschriebenen Art erfindungsgemäß dadurch gelöst, daß der Leitungsstrang einen längs einer Strangachse langgestreckten und um die Strangachse verdrehbaren Leitungsstrangabschnitt aufweist.

Mit dieser erfindungsgemäßen Lösung wird eine besonders raumsparende Führung des die Drehbewegung der Trommel relativ zum Maschinengestell mitmachenden Teil des Leitungsstrangs geschaffen, da der Leitungsstrang mit seinem langgestreckten Leitungsstrangabschnitt einen geringen Raumbedarf aufweist und der Raumbedarf insbesondere radial zur Trommelachse sehr gering ist.

Besonders vorteilhaft wirkt sich dieser Raumbedarf auf den Bewegungsraum von relativ zur Trommel in Richtung der Trommelachse bewegbaren Bearbeitungseinrichtungen auf, da sich bei der erfindungsgemäßen Lösung der langgestreckte Leitungsstrangabschnitt innerhalb eines zylindrischen Raums um die Trommelachse anordnen läßt, welcher bei einer Bewegung der Bearbeitungsrichtungen längs der Trommelachse nicht tangiert wird.

Der langgestreckte Leitungsstrangabschnitt könnte prinzipiell noch in beliebiger Form verdrehbar sein. Besonders vorteilhaft ist es dabei, wenn der langgestreckte Leitungsstrangabschnitt ausschließlich um die Strangachse drehbar ausgebildet ist, da ein langgestreckter Leitungsstrangabschnitt eine derartige Verdrehung bei geringster Materialbeanspruchung optimal verträgt.

Der Leitungsstrangabschnitt könnte prinzipiell nicht nur langgestreckt ausgebildet sein, sondern auch gewendelte Leitungen umfassen oder ausschließlich aus derartigen Leitungen aufgebaut sein, so daß ein Verdrehen des langgestreckten Leitungsstrangabschnitts zu einem Auf- oder Zudrehen der Wendel führen würde.

Eine derartige zusätzliche Wendelung der einzelnen Leitungen des Leitungsstrangabschnitts hat jedoch den Nachteil, daß der gesamte langgestreckte Leitungsabschnitt dabei wieder in radialer Richtung zur Strangachse größer baut, oder daß in Kauf genommen werden muß, daß sich die einzelnen Leitungen in diesem langgestreckten Leitungsabschnitt gegebenenfalls gegenseitig berühren und somit aufgrund der Berührung im laufe der Zeit Verschleißerscheinungen auftreten.

Aus diesem Grund sieht ein besonders vorteilhaftes Ausführungsbeispiel vor, daß der Leitungsstrangabschnitt in einer unverdrehten Grundstellung im wesentlichen parallel zueinander verlaufende langgestreckte Leitungen aufweist. In diesem Fall lassen sich die Leitungen besonders vorteilhaft mit möglichst geringem Querschnitt des gesamten Leitungsstrangs in radialer Richtung anordnen, wobei im wesentlichen ein gegenseitiges Berühren der einzelnen Leitungen vermieden wird.

In diesem Fall führt ein Verdrillen des langgestreckten Leitungsabschnitts dazu, daß die einzelnen Leitungen in wenig ausgeprägter Form wendelähnlich um die Strangachse herum verlaufen.

Um die Verdrillung möglichst gering zu halten und somit die gesamte Länge des langgestreckten Leitungsstrangabschnitts ebenfalls möglichst gering zu halten, ist vorteilhafterweise vorgesehen, daß der Leitungsstrangabschnitt ausgehend von seiner unverdrehten Grundstellung in entgegengesetzte Richtungen um maximal 180° verdrehbar ist. Diese Lösung ermöglicht es, mit einer Spindeltrommel im Prinzip eine Gesamtdrehung von bis zu 360° durchzuführen und somit einen einer Drehung der Trommel um bis zu 360° entsprechenden Bearbeitungszyklus abzuarbeiten, dann jedoch nicht über 360° hinauszudrehen, sondern durch schnelles Zurückdrehen zur Ausgangsposition wiederum durch Drehen, um bis zu 360° den nächsten Bearbeitungszyklus durchzuführen.

Im Falle von acht in gleichen Winkelabständen angeordneten Bearbeitungseinrichtungen beträgt der maximale Winkel im einfachsten Fall nur 315°, bei sechs Bearbeitungseinrichtungen nur 300°.

Drehbewegungen um +/- 180° lassen sich jedoch bereits mit relativ kurzen und hochflexiblen Leitungen gut realisieren, wobei eine Länge des langgestreckten Leitungsabschnitts von ungefähr 2m, vorzugsweise in der Größenordnung von 1m, die gestellten Anforderungen erfüllt.

Der langgestreckte Leitungsstrangabschnitt könnte prinzipiell noch in beliebiger Form verdrehbar sein. Besonders vorteilhaft ist es dabei, wenn der langgestreckte Leitungsstrangabschnitt ausschließlich um die Strangachse drehbar ausgebildet ist, da ein langgestreckter Leitungsstrangabschnitt eine derartige Verdrehung bei geringster Materialbeanspruchung optimal verträgt.

Die Strangachse könnte prinzipiell im Winkel zur Trommelachse verlaufen. In diesem Fall sind jedoch außerhalb des langgestreckten Leitungsstrangabschnitts zusätzliche Abschnitte vorzusehen, in welchen die einzelnen Leitungen des Leitungsstrangs so geführt sind, daß sie einen Ausgleich einer Zusatzbewegung, die durch eine von der Parallelität zur Trommelachse abweichende Strangachse bedingt wäre.

Aus diesem Grund ist vorzugsweise sogar vorgesehen, daß die Strangachse koaxial zur Trommelachse verläuft.

Die erfindungsgemäße Lösung kann beispielsweise so realisiert sein, daß sich der langgestreckte Leitungsstrangabschnitt bereits innerhalb der Trommel erstreckt.

Um, insbesondere bei einer großen erforderlichen Länge des Leitungsstrangabschnitts, ausreichend Raum für die Führung desselben zu haben, ist es besonders vorteilhaft, wenn sich der langgestreckte Leitungsstrangabschnitt in Richtung vom Arbeitsraum weg erstreckt, vorzugsweise auf einer dem Arbeitsraum entgegengesetzten Seite der Trommel, da in diesem Fall keinerlei Behinderung der Werkstückbearbeitung im Arbeitsraum durch den langgestreckten Leitungsstrangabschnitt erfolgt.

Ist beispielsweise eine Werkstoffzuführung auf der dem Arbeitsraum abgewandten Seite der Trommel vorgesehen, so ist vorzugsweise der langgestreckte Leitungsstrangabschnitt so angeordnet, daß dieser sich durch die Werkstoffzuführung für die Trommel hindurcherstreckt.

Alternativ dazu ist bei einer anderen Lösung, bei welcher keine Werkstoffzuführung vorhanden ist, vorgesehen, daß der langgestreckte Leitungsstrangabschnitt sich längs der Steuer- und Versorgungseinheit erstreckt.

Um den entlanggestreckten Leitungsstrangabschnitt definiert zu führen, ist vorgesehen, daß dieser an einer Strangführung langgestreckt gehalten ist, welche eine mit der Trommel mitrotierende Endhalterung und eine um die Strangachse unverdrehbare Endhalterung aufweist. Mit dieser Art der Führung des Leitungsstrangabschnitts ist insbesondere eine hohe Dauerbetriebssicherheit gewährleistet, da die Leitungen nur den aufgrund der Verdrehung des Leitungsstrangabschnitts unbedingt erforderlichen Deformationen, jedoch keinen zusätzlichen Deformationen ausgesetzt sind.

Um eine aufgrund der Verdrillung des langgestreckten Leitungsstrangabschnitts auftretende Längenverkürzung desselben in besonders einfacher Weise ausgleichen zu können, ist vorgesehen, daß die Endhalterungen hinsichtlich ihres Abstands in Richtung der Strangachse relativ zueinander bewegbar sind.

Im einfachsten Fall ist vorgesehen, daß eine der Endhalterungen in Richtung der Strangachse stationär angeordnet ist, während die andere Endhalterung in Richtung der Strangachse bewegbar angeordnet ist. Es ist aber auch möglich, beide Endhalterungen in Richtung der Strangachse bewegbar anzuordnen.

Um die Längenänderungen des langgestreckten Leitungsstrangabschnitts beim Verdrehen desselben um die Strangachse im Hinblick auf mit den Antrieben verbundene oder mit der Steuer- und Versorgungseinheit verbundene Anschlüsse ausgleichen zu können, vorzugsweise vorgesehen, daß sich an den langgestreckten Leitungsstrangabschnitt ein eine Längsbewegung von dessen Ende in Richtung der Strangachse ausgleichender Leitungsabschnitt anschließt. Ein derartiger spezifisch für den Längenausgleich vorgesehener Leitungsabschnitt hat den Vorteil, daß dieser einen von der Verdrehung völlig unabhängigen Ausgleich der Längenänderungen des langgestreckten Leitungsstrangabschnitts erlaubt.

Besonders zweckmäßig läßt sich ein derartiger längenausgleichender Leitungsstrangabschnitt dann gestalten, wenn die einzelnen Leitungen eine gebogene Form aufweisen, welche durch die Längsbewegung des Endes in Richtung der Strangachse variierbar ist. Durch eine derartig gebogene Form der einzelnen Leitungen lassen sich auch relativ großen Längsbewegungen ohne starke Beanspruchung der Leitungen selbst in einfacher Weise ausgleichen.

Besonders zweckmäßig ist es dabei, wenn die gebogene Form der Leitungen eine U-Form ist.

Besonders große Längsbewegungen in Richtung der Strangachse lassen sich dann ausgleichen, wenn sich die Schenkel der U-Form ungefähr parallel zur Strangachse erstrecken, da in diesem Fall eine Parallelverschiebung der Schenkel des U relativ zueinander erfolgt, jedoch der Bogen des U seine Form nicht wesentlich ändert und somit die die U-Form bildende Leitung entweder geradegestreckt oder im Bogen des U verläuft, so daß die Belastung der Leitung hierdurch möglichst gering gehalten wird.

Bei einer Vielzahl von Leitungen, insbesondere von zu einzelnen Bearbeitungseinrichtungen direkt führenden Leitungen, ist vorzugsweise vorgesehen, daß die U-Form in einer durch die Strangachse verlaufenden Ebene liegt, so daß sich die U-förmig geführten einzelnen Leitungen rings um die Strangachse in Ebenen anordnen lassen, welche eine durch die Strangachse definierte Ebenenschar bilden.

Im Zusammenhang mit den bislang beschriebenen Ausführungsbeispielen wurde lediglich darauf abgestellt, daß der langgestreckte Leitungsstrangabschnitt zwischen zwei Endhalterungen angeordnet ist. Um zusätzlich eine Berührung der einzelnen Leitungen während des Verlaufs des langgestreckten Leitungsstrangabschnitts zu verhindern und diese stets relativ zueinander definiert zu führen, ist vorgesehen, daß zwischen den Endhalterungen Zwischenhalterungen angeordnet sind, die insbesondere die einzelnen Leitungen in gleicher Weise relativ zueinander positionieren wie die beiden Endhalterungen.

Um außerdem noch ein Durchhängen der Leitungen zwischen den Endhalterungen zu verhindern, ist vorteilhafterweise vorgesehen, daß die Zwischenhalterungen auf einem Träger der Strangführung drehbar angeordnet sind.

Mittels eines derartigen Trägers für die Zwischenhalterungen läßt sich der gesamte Verlauf der einzelnen Leitungen im langgestreckten Leitungsstrangabschnitt besonders vorteilhaft festlegen.

Um außerdem sicherzustellen, daß die einzelnen Leitungen des langgestreckten Leitungsstrangabschnitts zwischen den Endhalterungen keinerlei Zwängen unterworfen sind, ist vorzugsweise vorgesehen, daß die Zwischenhalterungen an dem Träger in Richtung der Strangachse bewegbar und um diese drehbar gelagert sind, so daß sich zwischen den Endhalterungen an jeder Stelle des langgestreckten Leitungsstrangabschnitts die erforderliche Verdrehung selbsttätig einstellen kann, wobei sich in der Regel vorteilhafterweise über die gesamte Länge des langgestreckten Leitungsstrangabschnitts eine konstante Verdrillung einstellen wird.

Der Träger kann dabei in unterschiedlichster Art und Weise ausgebildet sein. Beispielsweise wäre es denkbar, allein für die Zwischenhalterungen einen Träger vorzusehen. Besonders vorteilhaft ist es jedoch, wenn der Träger mindestens eine der Endhalterungen und die Zwischenhalterungen trägt. Damit kann der Träger entweder mit der drehfesten oder mit der drehbaren Endhalterung fest verbunden sein, während die Zwischenhalterungen in jedem Fall relativ zum Träger drehbar und in Richtung der Strangachse verschiebbar sein sollten.

Im einfachsten Fall ist dabei vorgesehen, daß der Träger als Trägerrohr ausgebildet ist. Ein derartiges Trägerrohr gewährleistet in einfacher Weise eine allseitige und einfache Drehführung für die Zwischenhalterungen.

Der Träger kann dabei ein selbständiges Teil sein, im Fall einer Werkstoffzuführung ist jedoch vorteilhafterweise vorgesehen, daß der Träger Führungen für den Werkstoff aufweist.

Besonders zweckmäßig ist es dabei, wenn der Träger koaxial zu den einzelnen Bearbeitungseinrichtungen angeordnete Führungen für den Werkstoff aufweist, wobei es sich im einfachsten Fall bei dem Werkstoff um Werkstoffstangen handelt.

In diesem Fall ist vorteilhafterweise vorgesehen, daß der Träger drehfest mit der Trommel verbunden ist, so daß gleichzeitig auch die Führungen für den Werkstoff mit der Trommel mitdrehbar sind.

Hinsichtlich der Ausbildung der Bearbeitungseinrichtungen wurden im Zusammenhang mit der bisherigen Erläuterung der erfindungsgemäßen Lösung keine näheren Angaben gemacht. So sieht eine vorteilhafte Variante vor, daß eine der Bearbeitungseinrichtungen als durch einen Antrieb rotierend antreibbare Spindel ausgebildet ist.

Vorzugsweise werden derartige Spindeln als Werkstückspindeln ausgebildet, so daß mit diesen Spindeln eine Drehbearbeitung eines Werkstücks erfolgt.

Alternativ dazu ist es aber auch denkbar, daß die Spindeln der Bearbeitungseinrichtungen sogenannte Werkzeugspindeln sind, das heißt ein rotierendes Werkzeug aufnehmen.

Alternativ oder ergänzend zur Ausbildung der Bearbeitungseinrichtungen als Spindeln ist im Rahmen der erfindungsgemäßen Lösung ebenfalls vorgesehen, daß eine der Bearbeitungseinrichtungen eine durch einen Antrieb betätigbare Spanneinrichtung aufweist. Das heißt, daß in diesem Fall die Spanneinrichtung, sei es für das Werkstück oder das Werkzeug, durch die Steuer- und Versorgungseinheit ansteuerbar ist, wobei ein Ansteuern des hierzu vorgesehenen Antriebs erfolgt, welcher beispielsweise als Spannzylinder ausgebildet sein kann.

Alternativ oder ergänzend zu den vorstehend beschriebenen Lösungen ist es ebenfalls im Rahmen der erfindungsgemäßen Lösung denkbar, daß eine der Bearbeitungseinrichtungen parallel zur Führung der Trommelachse relativ zur Trommel verschiebbar ist. Dies gilt insbesondere für pinolenartig ausgebildete Bearbeitungseinrichtungen. Derartige Bearbeitungseinrichtungen können Werkstückspindeln, Werkzeugspindeln oder auch Werkstückaufnahmen oder Werkstückführungen sein, welche mit einer Werkstückspindel zusammenwirken.

Alle derartigen Arten von Bearbeitungseinrichtungen und auch Bearbeitungsmöglichkeiten sind beispielsweise in den deutschen Patentanmeldungen 195 04 371.5 oder 195 04 370.7 beschrieben.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: einen Längsschnitt durch eine erfindungsgemäße Mehrspindeldrehmaschine;
- Fig. 2: eine vergrößerte Darstellung der linken Seite des Längsschnitts in Fig. 1 und
- Fig. 3: eine vergrößerte Darstellung der rechten Seite des Längsschnitts in Fig. 1.

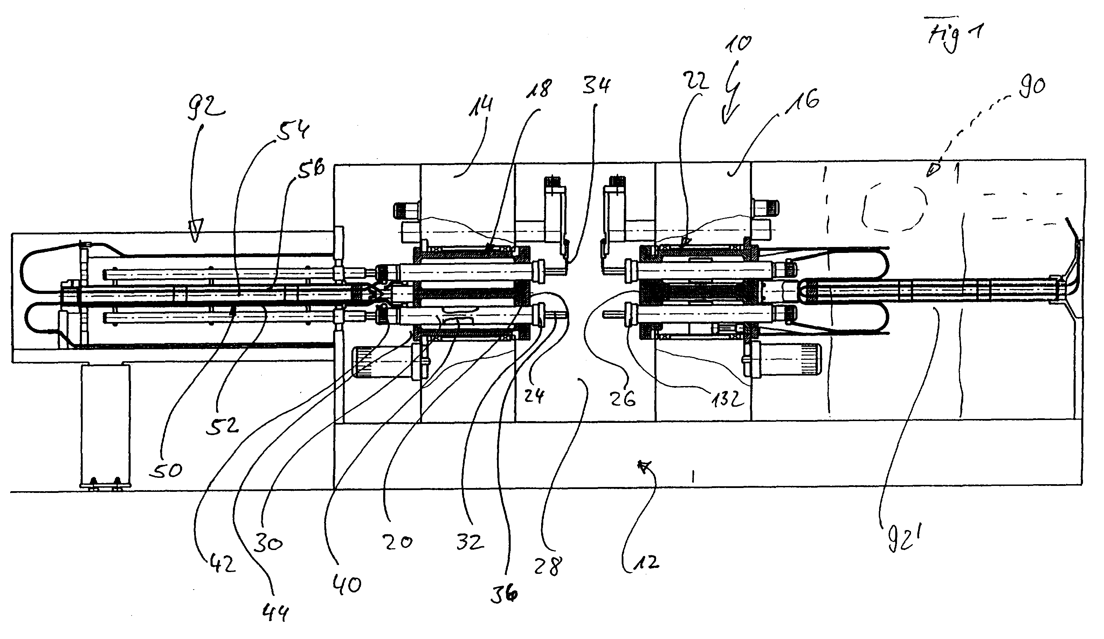

Ein Ausführungsbeispiel für eine erfindungsgemäße Werkzeugmaschine ist eine in den Figuren 1 bis 3 dargestellte und als Ganzes mit 10 bezeichnete Mehrspindeldrehmaschine, welche ein Maschinengestell 12 mit einem Spindelkasten 14 sowie einem Gegenspindelkasten 16 aufweist, wobei in dem Spindelkasten 14 eine als Ganzes mit 18 bezeichnete Spindeltrommel um eine Spindelachse 20 drehbar gelagert ist.

Desgleichen ist im Gegenspindelkasten 16 eine als Ganzes mit 22 bezeichnete Gegenspindeltrommel ebenfalls um die Spindelachse 20 drehbar angeordnet.

Sowohl die Spindeltrommel 18 als auch die Gegenspindeltrommeln 22 sind mit ihren Frontseiten einem mit 28 bezeichneten Arbeitsraum zugewandt angeordnet.

Die Spindeltrommel 18 trägt eine Vielzahl von Bearbeitungseinrichtungen, in diesem Fall zylinderförmige oder pinolenförmige Werkstückspindeln 30, vorzugsweise sechs oder acht, welche in gleichen Winkelabständen um die Trommelachse 20 herum angeordnet sind und auf einer dem Arbeitsraum 18 zugewandten Seite eine Spanneinrichtung 32, beispielsweise ein Spannfutter, für in dem Arbeitsraum 28 mit Werkzeugen 34 zu bearbeitende Werkstücke 36 tragen.

Um die Werkstückspindeln 30 rotierend antreiben zu können, ist jede derselben mit einem dieser ausschließlich zugeordneten Spindelmotor 40 als Antrieb versehen, welcher in die jeweilige Werkstückspindel 30 integriert oder separat aufgesetzt sein kann.

Ferner ist jede der Werkstückspindeln 30 noch mit einem die jeweilige Spanneinrichtung 32 betätigenden Spannzylinder 42 als Antrieb versehen.

Zur Versorgung und Steuerung der Antriebe, das heißt der Spindelmotoren 40 und der Spannzylinder 42 sowie gegebenenfalls weiterer Antriebe oder Sensoren ist ein von einer der Frontseite 24 entgegengesetzten Rückseite 44 der Spindeltrommel 18 ausgehender Leitungsstrang 50 vorgesehen, welcher sich mit einem langgestreckten Leitungsstrangabschnitt 52 längs einer Strangachse 54 erstreckt, welche parallel zur Trommelachse 20 verläuft.

Der Leitungsstrang 50 umfaßt zumindest in seinem langgestreckten Leitungsstrangabschnitt 52 eine Vielzahl von parallel zueinander verlaufenden Leitungen 56, welche vorzugsweise symmetrisch zur Strangachse 54 und um diese herum angeordnet sind.

Diese Leitungen 56 können dabei jede Art von Versorgungsleitungen sein, beispielsweise Druckleitungen, insbesondere Öldruckleitungen, und/oder elektrische Leitungen.

Der langgestreckte Leitungsabschnitt 52 verläuft vorzugsweise in einem Trägerrohr 60, welches koaxial zur Strangachse 54 angeordnet und drehfest mit der Spindeltrommel 18 verbunden ist.

Das Trägerrohr 60 weist hierzu an seinem der Spindeltrommel 18 zugewandten Ende 62 radiale Durchbrüche 64 auf, durch welche die zu den einzelnen Antrieben 40, 42 führenden Leitungen 56 aus dem Trägerrohr 60 herausgeführt sind. In dem Trägerrohr 60 sind im Bereich des Endes 62 die durch die Durchbrüche 64 in dieses geführten Leitungen 56 durch eine Endhalterung 66 gehalten, wobei die Endhalterung 66 drehfest mit dem Trägerrohr 60 und somit mit der Spindeltrommel 18 verbunden ist. Die Endhalterung 66 ist außerdem in Richtung der Trommelachse 20 unverschieblich in dem Trägerrohr 60 fixiert.

Die Endhalterung 66 führt vorzugsweise die gesamten Leitungen 56 des langgestreckten Leitungsstrangabschnitts 52 an seinem spindeltrommelseitigen Ende 68 in definierten Abständen voneinander.

An seinem dem Ende 68 gegenüberliegenden spindeltrommelabgewandten Ende 70 des langgestreckten Leitungsstrangabschnitts 52 ist dieser ebenfalls in einer Endhalterung 72 gehalten, welche drehfest bezüglich des Maschinengestells 12 angeordnet ist, jedoch in Richtung der Strangachse 54 längsverschieblich in einer Aufnahme 74 geführt ist. Zwischen den beiden Enden 68 und 70 erstreckt sich der langgestreckte Leitungsstrangabschnitt 52 mit im wesentlichen um die zur Strangachse 54 angeordneten langgestreckten einzelnen Leitungen 56, wobei die Leitungen 56 in einer Grundstellung des langgestreckten Leitungsstrangabschnitts 52 parallel zueinander und im wesentlichen parallel zur Strangachse 54 verlaufen.

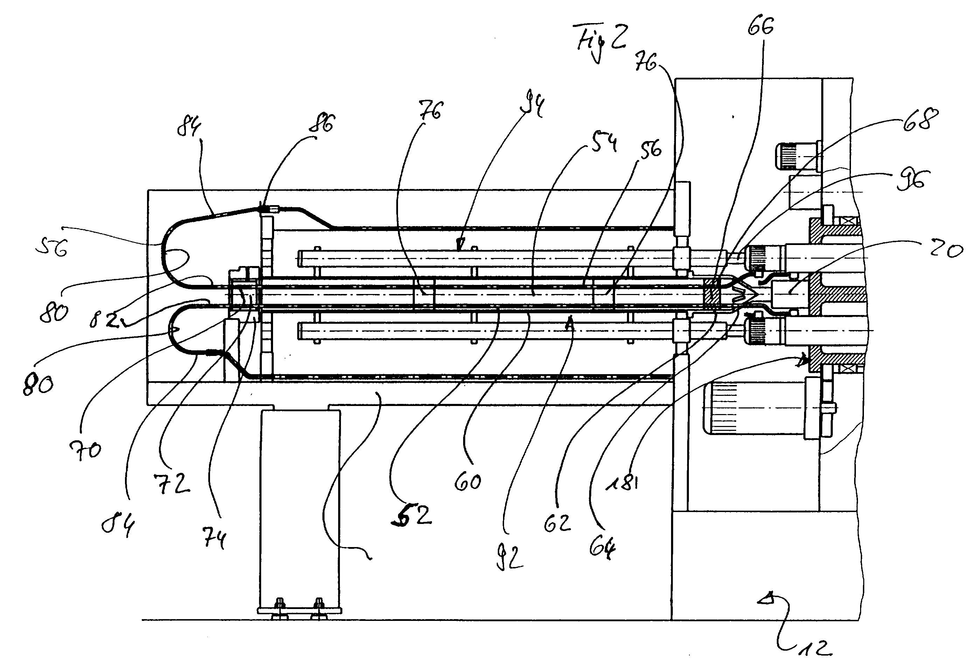

Ausgehend von der in Fig. 2 dargestellten Grundstellung des langgestreckten Leitungsstrangabschnitts 52 ist dieser in einander entgegengesetzten Drehrichtungen um bis zu 180° durch Drehung der Spindeltrommel 18 verdrehbar, wobei sich die Endhalterung 66 mit der Spindeltrommel 18 mitdreht, während die Endhalterung 72 relativ zum Maschinengestell drehfest stehen bleibt. Somit verdrillt sich der langgestreckte Leitungsstrangabschnitt 52 als Ganzes, wobei die einzelnen Leitungen 56 dann bei Maximaldrehung geringfügig wendelähnlich im die Strangachse 54 herum verlaufen.

Um die Leitungen 56 zwischen den Enden 68 und 70 des langgestreckten Leitungsstrangabschnitts 52 definiert zu führen, sind in dem Trägerrohr 60 in Abständen voneinander Zwischenhalterungen 76 vorgesehen, welche um die Strangachse 54 frei drehbar und in Richtung der Strangachse 54 relativ zum Trägerrohr 60 verschiebbar sind, wobei die Zwischenhalterungen 76 dazu dienen, die Leitungen 56 in gleicher Weise wie die Endhalterungen 66 und 72 relativ zueinander zu positionieren.

Bei der Verdrehung des langgestreckten Leitungsstrangabschnitts 52 um die Strangachse 54 als Verdrillungsachse und dem dadurch bedingten geringfügigem wendelähnlichen Verlauf der Leitungen 56 verkürzt sich der langgestreckte Leitungsstrangabschnitt 52 zwischen den Enden 68 und 70, wobei diese Verkürzung durch die in Richtung der Strangachse 54 bewegbare Endhalterung 72 ausgleichbar ist. Da außerdem die Zwischenhalterungen 76 ebenfalls in Richtung der Strangachse 54 bewegbar, jedoch noch zusätzlich relativ zum Trägerrohr 60 frei verdrehbar sind, kann sich zwischen den Enden 68 und 70 des langgestreckten Leitungsstrangabschnitts 52 eine gleichmäßige Verdrillung der Leitungen 56 um die Strangachse 54 als Verdrillungsachse einstellen.

Um den Leitungsstrang 50 im Anschluß an die längs der Strangachse 54 verschiebliche Endhalterung 72 so zu gestalten, daß dieser maschinengestellfest weitergeführt werden kann, jedoch die Bewegung der Endhalterung 72 längs der Strangachse 54 noch ausgleichen kann, sind die einzelnen Leitungen 56 ausgehend von der Endhalterung 72 in U-förmigen Bögen 80 geführt, wobei ein erster Schenkel 82 jedes Bogens 80 einer Leitung 56 sich unmittelbar in die Endhalterung 72 fortsetzt, während der jeweils andere Schenkel 84 zu einem maschinengestellfesten Anschluß 86 führt, so daß ausgehend von diesem maschinengestellfesten Anschluß 86 mit maschinengestellfesten Leitungen eine Verbindung zu einer Steuer- und Versorgungseinheit 90 erfolgt. Die Schenkel 82, 84 verlaufen dabei ungefähr in Richtung der Strangachse 54.

Die Endhalterungen 66 und 72 sowie die Zwischenhalterungen 76, das Trägerrohr 60 und die Aufnahme 74 für die Endhalterung 72 stellen insgesamt eine als Ganzes mit 92 bezeichnete Strangführung für den langgestreckten Leitungsstrangabschnitt 52 dar.

Vorzugsweise bildet das Trägerrohr 60, wie in Fig. 2 dargestellt, gleichzeitig das Trägerrohr 60 für an diesem angeordnete Werkstoffzuführungen 94, welche insbesondere mitsamt dem Trägerrohr 60 gemeinsam mit der Spindeltrommel 18 drehbar sind. Die Werkstoffzuführungen 94 sind beispielsweise Zuführungen für koaxial in die Werkstückspindeln 30 der Spindeltrommel 18 einzuführende Werkstoffstangen 96. In diesem Fall sind die Werkstoffzuführungen 94 koaxial zu den einzelnen Werkstückspindeln 30 um das Trägerrohr 60 angeordnet und somit ebenfalls um die koaxial zur Trommelachse 20 verlaufende Strangachse 54 in gleicher Weise wie die Spindeltrommel 18 drehbar.

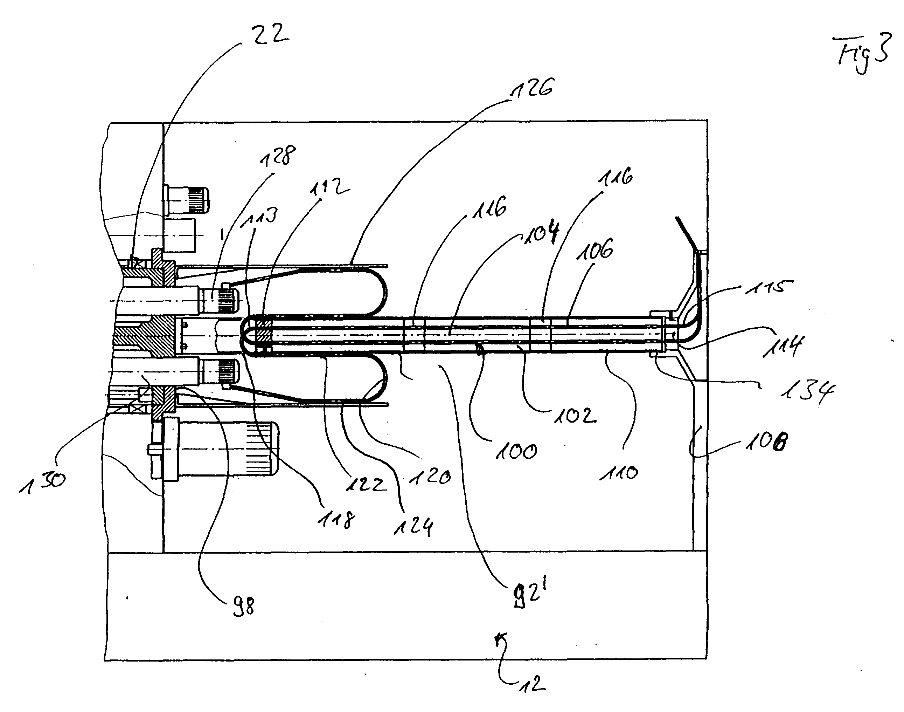

Wie in Fig. 1 und Fig. 3 vergrößert dargestellt, erstreckt sich auch ausgehend von der Gegenspindeltrommel 22, und zwar deren der Frontseite 26 abgewandten Rückseite 98, ein Leitungsstrang 100 mit einem langgestreckten Leitungsstrangabschnitt 102 koaxial zu einer Strangachse 104 mit einzelnen Leitungen 106 in Richtung einer der Rückseite 98 gegenüberliegenden Wand 108 des Maschinengestells 12.

Dabei verläuft der langgestreckte Leitungsstrangabschnitt 102 ebenfalls in einem Trägerrohr 110, und erstreckt sich zwischen einem in einer gegenspindeltrommelseitigen Endhalterung 112 gehaltenen Ende 113 sowie einem in einer maschinengestellfesten Endhalterung 114 gehaltenen Ende 115, wobei die Endhalterung 114 in Richtung der Strangachse 104 unverschieblich und auch um diese unverdrehbar am Maschinengestell 12 gehalten ist.

Dagegen ist die Endhalterung 112 in dem Trägerrohr 110 in Richtung der Strangachse 104 verschieblich, und mit dem Trägerrohr 110 drehbar, wobei das Trägerrohr 110 drehfest mit der Gegenspindel 22 verbunden ist.

Zwischen den Endhalterungen 112 und 114 sind ferner noch Zwischenhalterungen 116 vorgesehen, welche in gleicher Weise wie beim Trägerrohr 60 relativ zu diesem um die Strangachse 104 drehbar und in Längsrichtung der Strangachse 104 verschieblich angeordnet sind.

Das Trägerrohr 110, die Endhalterungen 112 und 114 und die Zwischenhalterungen 116 bilden ebenfalls eine Strangführung 92' für den Leitungsstrangabschnitt 102.

Der langgestreckte Leitungsabschnitt 102 ist mit den einzelnen Leitungen 106 ausgehend von einer Grundstellung in gleicher Weise wie der langgestreckte Leitungsstrangabschnitt 52 um die Strangachse 104 verdrillbar, wobei eine Längenänderung durch die Verschiebbarkeit der Endhalterung 112 in Richtung der Strangachse 104 ausgleichbar ist.

Die Leitungen 106 des Leitungsstrangs 100 sind im Anschluß an die Endhalterung 112 über Durchbrüche 118 des Trägerrohrs 110 aus diesem herausgeführt und bilden U-förmige Bögen 120, wobei ein Schenkel 122 jedes Bogens 120 an einer Außenseite des Trägerrohrs 110 anliegt, während ein zweiter Schenkel 124 jedes U-förmigen Bogens 120 an einer fest mit der Gegenspindeltrommel 22 verbundenen Führung 126 anliegt, welche ungefähr parallel zur Strangachse 104 verläuft. Somit liegen die Schenkel 122 und 124 der U-förmigen Bögen 120 ebenfalls ungefähr parallel zur Strangachse 104.

Am Ende der Schenkel 124 sind die in U-förmigen Bögen 120 geführten Leitungen mit einem Antrieb 128 von in der Gegenspindeltrommel 22 gehaltenen pinolenähnlichen Werkstückspindeln 130 verbunden. Die pinolenähnlichen Werkstückspindeln 130 in der Gegenspindeltrommel 22 weisen ihrerseits nicht nur einen Spindelmotor und einen Spannzylinder für eine Spanneinrichtung 132 derselben auf, sondern sind zusätzlich in Richtung der Trommelachse 20 verschieblich in der Gegenspindeltrommel 22 gehalten, so daß mit diesen eine sogenannte Z-Achsenbewegung durchführbar ist.

Die Führung der Leitungen 106 des Leitungsstrangs 100 in Form der Bögen 120 schafft nun einerseits die Möglichkeit, eine Längsbewegung der gegenspindeltrommelseitigen Endhalterung 112 entsprechend einem Verdrillen des langgestreckten Leitungsstrangabschnitts 102 auszugleichen, und andererseits die Möglichkeit, die Bewegung der einzelnen Werkstückspindeln 130 parallel zur Spindelachse auszugleichen, sofern die Leitungen 106 zu mit den Spindeln 130 bewegten Antrieben 128 geführt sind.

Dabei liegen die Bögen 120, in welchen die Leitungen 106 ausgehend von der Endhalterung 112 bis zu den Antrieben 128 geführt sind, vorzugsweise in Ebenen, welche durch die Strangachse 104, welche ihrerseits parallel zur Spindelachse 20 verläuft, hindurchverlaufen.

Wie außerdem in Fig. 1 dargestellt, erstreckt sich der Leitungsstrang 100 mit seinem langgestreckten Leitungsstrangabschnitt 102 vorzugsweise längs der Steuer- und Versorgungseinheit 90, insbesondere hinter derselben, wobei zur Stabilisierung das Trägerrohr 110 nahe der Endhalterung 114 in einer Drehaufnahme 134 drehbar gelagert ist.

Im Anschluß an die Endhalterung 114 können dann die einzelnen Leitungen 106 des Leitungsstrangs 110 maschinengestellfest angeordnet zu der Steuer- und Versorgungseinheit geführt werden.

Eine Drehung der Gegenspindeltrommel 22 in zueinander entgegengesetzte Richtungen um maximal 180° führt in gleicher Weise wie beim Leitungsstrang 50 auch beim langgestreckten Leitungsstrangabschnitt 102 zu einer Verdrillung des langgestreckten Leitungsstrangabschnitts 102 und somit zu einem geringfügig wendelähnlichen Verlauf der einzelnen Leitungen 106 zwischen den Endhalterungen 112 und 114.

Dadurch daß die Endhalterung 112 drehfest mit der Gegenspindeltrommel 22 verbunden ist, dreht sich das in dieser aufgenommene Ende des langgestreckten Leitungsstrangabschnitts 102 um den gleichen Drehwinkel wie die Gegenspindeltrommel 22, so daß auch die im Anschluß an die Endhalterung 112 die in den Bögen 120 geführten Leitungen 106 mitsamt den Bögen 120 mit der Gegenspindeltrommel 22 mitgedreht werden.

## Patentansprüche

1. Werkzeugmaschine umfassend ein Maschinengestell (12), eine um eine Trommelachse (20) drehbar am Maschinengestell angeordnete Spindeltrommel (18; 22) mit einer Vielzahl von an dieser gehaltenen Bearbeitungseinrichtungen (30; 130) für Werkzeuge und mit der Trommel mitdrehbaren, den Bearbeitungseinrichtungen zugeordneten Antrieben (40, 42; 128), eine stationäre Steuer- und Versorgungseinheit (90) für die Antriebe und einen einerseits mit den mit der Trommel mitdrehbaren Antrieben (40, 42; 128) und andererseits mit der Steuer- und Versorgungseinheit (90) verbundenen unterbrechungsfreien und drehverbindungsfreien, durch Drehung der Spindeltrommel (18; 22) verformbaren Leitungsstrang (50; 100), **dadurch gekennzeichnet**, daß der Leitungsstrang (50; 100) einen längs einer Strangachse (54; 104) langgestreckten und um die Strangachse (54; 104) verdrehbaren Leitungsstrangabschnitt (52; 102) aufweist.

2. Werkzeugmaschine nach Anspruch 1, dadurch gekennzeichnet, daß der langgestreckte Leitungsstrangabschnitt (52, 102) ausschließlich um die Strangachse (54, 104) drehbar ausgebildet ist.

3. Werkzeugmaschine nach Anspruch 1 oder 2, dadurch gekennzeichnet, daß der Leitungsstrangabschnitt (52, 102) in einer unverdrehten Grundstellung im wesentlichen parallel zueinander verlaufende, langgestreckte Leitungen (56, 106) aufweist.

4. Werkzeugmaschine nach einem der voranstehenden Ansprüche, dadurch gekennzeichnet, daß der Leitungsstrangabschnitt (52, 102) ausgehend von seiner unverdrehten Grundstellung in entgegengesetzte Richtungen um maximal 180° verdrehbar ist.

5. Werkzeugmaschine nach einem der voranstehenden Ansprüche, dadurch gekennzeichnet, daß die Strangachse (54, 104) koaxial zur Trommelachse (20) verläuft.

6. Werkzeugmaschine nach einem der voranstehenden Ansprüche, dadurch gekennzeichnet, daß sich der langgestreckte Leitungsstrangabschnitt (52, 102) in Richtung vom Arbeitsraum (28) weg erstreckt.

7. Werkzeugmaschine nach einem der voranstehenden Ansprüche, dadurch gekennzeichnet, daß der Leitungsstrangabschnitt (52, 102) an einer Strangführung (92) langgestreckt gehalten ist, welche eine mit der Trommel (18, 22) mitrotierende Endhalterung (66, 112) und eine um die Strangachse (54, 104) unverdrehbare Endhalterung (72, 114) aufweist.

8. Werkzeugmaschine nach Anspruch 7, dadurch gekennzeichnet, daß die Endhalterungen (66, 72; 112, 114) hinsichtlich ihres Abstands in Richtung der Strangachse (54, 104) relativ zueinander bewegbar sind.

9. Werkzeugmaschine nach einem der voranstehenden Ansprüche, dadurch gekennzeichnet, daß sich an den langgestreckten Leitungsstrangabschnitt (52, 102) ein eine Längsbewegung von dessen Ende (70, 113) in Richtung der Strangachse (54, 104) ausgleichender Leitungsabschnitt (80, 120) anschließt.

10. Werkzeugmaschine nach Anspruch 9, dadurch gekennzeichnet, daß die einzelnen Leitungen (56, 106) des Leitungsabschnitts eine gebogene Form (80, 120) aufweisen, welche durch die Längsbewegung des Endes (70, 113) in Richtung der Strangachse (54, 104) variierbar ist.

11. Werkzeugmaschine nach Anspruch 10, dadurch gekennzeichnet, daß die gebogene Form der Leitungen (56, 106) eine U-Form (80, 120) ist.

12. Werkzeugmaschine nach Anspruch 11, dadurch gekennzeichnet, daß sich die Schenkel (82, 84; 122, 124) der U-Form (80, 120) ungefähr parallel zur Strangachse (54, 104) erstrecken.

13. Werkzeugmaschine nach Anspruch 11 oder 12, dadurch gekennzeichnet, daß die U-Form (80, 120) in einer durch die Strangachse (54, 104) verlaufenden Ebene liegt.

14. Werkzeugmaschine nach einem der Ansprüche 7 bis 13, dadurch gekennzeichnet, daß zwischen den Endhalterungen (66, 72; 112, 114) Zwischenhalterungen (76; 116) angeordnet sind.

15. Werkzeugmaschine nach Anspruch 14, dadurch gekennzeichnet, daß die Zwischenhalterungen (76, 116) an einem Träger (60, 110) der Strangführung (92) drehbar angeordnet sind.

16. Werkzeugmaschine nach Anspruch 14 oder 15, dadurch gekennzeichnet, daß die Zwischenhalterungen (76, 116) an dem Träger (60, 110) in Richtung der Strangachse (54, 104) bewegbar und um diese drehbar gelagert sind.

17. Werkzeugmaschine nach Anspruch 15 oder 16, dadurch gekennzeichnet, daß der Träger (60, 110) mindestens eine der Endhalterungen (66, 112) und eine Zwischenhalterung (76, 116) trägt.

18. Werkzeugmaschine nach einem der Ansprüche 15 bis 17, dadurch gekennzeichnet, daß der Träger als Trägerrohr (60, 110) ausgebildet ist.

19. Werkzeugmaschine nach einem der Ansprüche 15 bis 18, dadurch gekennzeichnet, daß der Träger (60) Führungen (94) für einen Werkstoff aufweist.

20. Werkzeugmaschine nach Anspruch 19, dadurch gekennzeichnet, daß der Träger (60) koaxial zu den einzelnen Bearbeitungseinrichtungen (30) angeordnete Führungen (94) für den Werkstoff aufweist.

21. Werkzeugmaschine nach einem der Ansprüche 15 bis 20, dadurch gekennzeichnet, daß der Träger (60) drehfest mit der Trommel (18) verbunden ist.

## Claims

1. Machine tool comprising a machine frame (12), a spindle drum (18; 22) arranged on the machine frame for rotation about a drum axis (20) and having a plurality of machining devices (30; 130) for tools held thereon and drives (40, 42; 128) associated with the machining devices and rotatable with the drum, a stationary control and supply unit (90) for the drives and a line system (50; 100) connected, on the one hand, to the drives (40, 42; 128) rotatable with the drum and, on the other hand, to the control and supply unit (90), said line system being free from interruptions and rotary connections and deformable as a result of rotation of the spindle drum (18; 22), characterized in that the line system (50; 100) has a long line system section (52; 102) extending along a system axis (54; 104) and rotatable about the system axis (54; 104).

2. Machine tool as defined in claim 1, characterized in that the long line system section (52, 102) is designed to be rotatable exclusively about the system axis (54, 104).

3. Machine tool as defined in claim 1 or 2, characterized in that the line system section (52, 102) has long lines (56, 106) extending essentially parallel to one another in a non-rotated basic position.

4. Machine tool as defined in any one of the preceding claims, characterized in that the line system section (52, 102) is rotatable through a maximum of 180° in opposite directions proceeding from its non-rotated basic position.

5. Machine tool as defined in any one of the preceding claims, characterized in that the system axis (54, 104) extends coaxially to the drum axis (20).

6. Machine tool as defined in any one of the preceding claims, characterized in that the long line system section (52, 102) extends in the direction away from the working space (28).

7. Machine tool as defined in any one of the preceding claims, characterized in that the line system section (52, 102) is held extended on a system guide means (92) having an end holding means (66, 112) rotating with the drum (18, 22) and an end holding means (72, 114) non-rotatable about the system axis (54, 104).

8. Machine tool as defined in claim 7, characterized in that the end holding means (66, 72; 112, 114) are movable relative to one another with respect to their spacing in the direction of the system axis (54, 104).

9. Machine tool as defined in any one of the preceding claims, characterized in that a line section (80, 120) adjoins the long line system section (52, 102) and compensates for any longitudinal movement of its end (70, 113) in the direction of the system axis (54, 104).

10. Machine tool as defined in claim 9, characterized in that the individual lines (56, 106) of the line section have a bent shape (80, 120) variable as a result of the longitudinal movement of the end (70, 113) in the direction of the system axis (54, 104).

11. Machine tool as defined in claim 10, characterized in that the bent shape of the lines (56, 106) is a U shape (80, 120).

12. Machine tool as defined in claim 11, characterized in that the arms (82, 84; 122, 124) of the U shape (80, 120) extend approximately parallel to the system axis (54, 104).

13. Machine tool as defined in claim 11 or 12, characterized in that the U shape (80, 120) is located in a plane extending through the system axis (54, 104).

14. Machine tool as defined in any one of claims 7 to 13, characterized in that intermediate holding means (76; 116) are arranged between the end holding means (66, 72; 112, 114).

15. Machine tool as defined in claim 14, characterized in that the intermediate holding means (76, 116) are rotatably arranged on a support (60, 110) of the system guide means (92).

16. Machine tool as defined in claim 14 or 15, characterized in that the intermediate holding means (76, 116) are mounted on the support (60, 110) so as to be movable in the direction of the system axis (54, 104) and rotatable about this axis.

17. Machine tool as defined in claim 15 or 16, characterized in that the support (60, 110) bears at least one of the end holding means (66, 112) and an intermediate holding means (76, 116).

18. Machine tool as defined in any one of claims 15 to 17, characterized in that the support is designed as a support tube (60, 110).

19. Machine tool as defined in any one of claims 15 to 18, characterized in that the support (60) has guide means (94) for stock.

20. Machine tool as defined in claim 19, characterized in that the support (60) has guide means (94) for the stock arranged coaxially to the individual machining devices (30).

21. Machine tool as defined in any one of claims 15 to 20, characterized in that the support (60) is non-rotatably connected to the drum (18).

## Revendications

1. Machine-outil comportant un bâti de machine (12), un tambour porte-broches (18 ; 22) disposé sur le bâti de la machine avec liberté de rotation autour de l'axe du tambour (20) et présentant une pluralité de dispositifs d'usinage (30 ; 130), montés sur ce tambour, pour des outils et des mécanismes d'entraînement (40, 42 ; 128) associés aux dispositifs d'usinage et pouvant être entraînés en rotation avec le tambour, un organe fixe de commande et d'alimentation (90) pour les mécanismes d'entraînement et un ruban de conduites (50 ; 100), relié d'une part aux mécanismes d'entraînement (40, 42 ; 128) qui peuvent être entraînés en rotation avec le tambour et d'autre part à l'organe de commande et d'alimentation (90), ne comprenant ni coupures ni liaisons tournantes, pouvant se déformer par rotation du tambour porte-broches (18 ; 22),
caractérisée par le fait que le ruban de conduites (50 ; 100) présente un tronçon (52; 102) de ruban de conduites qui s'étend, allongé, le long d'un axe de ruban (54 ; 104) et peut prendre une torsion autour de l'axe du ruban (54 ; 104).

2. Machine-outil selon la revendication 1, caractérisée par le fait que le tronçon (52, 102) de ruban de conduites allongé est exclusivement conçu pour prendre une torsion autour de l'axe du ruban (54, 104).

3. Machine-outil selon la revendication 1 ou 2, caractérisée par le fait qu'à l'état de base, non tordu, le tronçon (52, 102) de ruban de conduites présente des conduites (56, 106) allongées, sensiblement orientées parallèlement l'une à l'autre.

4. Machine-outil selon l'une des revendications précédentes, caractérisée par le fait qu'en partant de sa position de base non tordue, le tronçon (52, 102) de ruban de conduites peut se tordre, dans des directions opposées, d'au maximum 180°.

5. Machine-outil selon l'une des revendications précédentes, caractérisée par le fait que l'axe (54, 104) du ruban est orienté coaxialement à l'axe (20) du tambour.

6. Machine-outil selon l'une des revendications précédentes, caractérisée par le fait que le tronçon allongé (52, 102) de ruban de conduites s'étend en direction opposée à l'espace de travail (28).

7. Machine-outil selon l'une des revendications précédentes, caractérisée par le fait que le tronçon (52, 102) de ruban de conduites est maintenu allongé entre un guidage de ruban (92) qui présente un support d'extrémité (66, 112) entraîné en rotation avec le tambour (18, 22) et un support d'extrémité (72, 114) qui ne peut pas être entraîné en rotation autour de l'axe de ruban (54, 104).

8. Machine-outil selon la revendication 7, caractérisée par le fait que les supports d'extrémité (66, 72 ; 112, 114) peuvent se déplacer l'un par rapport à l'autre en ce qui concerne leur distance selon la direction de l'axe du ruban (54, 104).

9. Machine-outil selon l'une des revendications précédentes, caractérisée par le fait qu'au tronçon allongé (52, 102) du ruban de conduites se raccorde un tronçon de conduites (80, 120) qui compense un mouvement longitudinal partant de l'extrémité (70, 113) du tronçon allongé, selon la direction de l'axe (54, 104) du ruban.

10. Machine-outil selon la revendication 9, caractérisée par le fait que les différentes conduites (56, 106) du tronçon de conduites présentent une forme cintrée (80, 120) qui peut varier par suite du mouvement longitudinal de l'extrémité (70, 113) selon la direction de l'axe (54, 104) du ruban.

11. Machine-outil selon la revendication 10, caractérisée par le fait que la forme cintrée des conduites (56, 106) est une forme en U (80, 120).

12. Machine-outil selon la revendication 11, caractérisée par le fait que les branches (82, 84 ; 122, 124) de la forme en U (80, 120) s'étendent à peu près parallèlement à l'axe (54, 104) du ruban.

13. Machine-outil selon la revendication 11 ou 12, caractérisée par le fait que la forme en U (80, 120) se situe dans un plan passant par l'axe (54, 104) du ruban.

14. Machine-outil selon l'une des revendications 7 à 13, caractérisée par le fait qu'entre les supports d'extrémité (66, 72 ; 112, 114) sont disposés des supports intermédiaires (76 ; 116).

15. Machine-outil selon la revendication 14, caractérisée par le fait que les supports intermédiaires (76, 116) sont disposés, avec liberté de rotation, sur un soutien (60, 110) faisant partie du guidage de ruban (92).

16. Machine-outil selon la revendication 14 ou 15, caractérisée par le fait que les supports intermédiaires (76, 116).sont portés sur le soutien (60, 110) avec liberté de déplacement selon la direction de l'axe de ruban (54, 104) et liberté de rotation autour de cet axe.

17. Machine-outil selon la revendication 15 ou 16, caractérisée par le fait que le soutien (60, 110) porte au moins l'un des supports d'extrémité (66, 112) et un support intermédiaire (76, 116).

18. Machine-outil selon l'une des revendications 15 à 17, caractérisée par le fait que le soutien est conçu sous forme d'un soutien tubulaire (60, 110).

19. Machine-outil selon l'une des revendication 15 à 18, caractérisée par le fait que le soutien (60) présente des guidages (94) pour une pièce brute.

20. Machine-outil selon la revendication 19, caractérisée par le fait que le soutien (60) présente pour la pièce brute des guidages (94) disposés coaxialement aux différents dispositifs d'usinage (30).

21. Machine-outil selon l'une des revendications 15 à 20, caractérisée par le fait que le soutien (60) est relié au tambour (18) sans liberté de rotation relative.
